# FASCICULE DE BREVET EUROPEEN

(11) **EP 3 247 149 B1**
(45) Date de publication et mention de la délivrance du brevet: **05.08.2020**
(21) Numéro de dépôt: 17170182.4
(22) Date de dépôt: 09.05.2017
(51) Int. Cl.: H04W 36/02, H04W 36/00, H04W 36/18, H04B 7/185

(54) **PROCÉDÉ DE BASCULEMENT DOUX A DIVERSITÉ DE SITES DE STATIONS D'ACCÈS MIS EN OEUVRE DANS UN SYSTÈME DE TÉLÉCOMMUNICATIONS SPATIALES**
SANFTES UMSCHALTVERFAHREN ZU EINER VIELZAHL VON ZUGANGSSTATIONEN, DAS IN EINEM RÄUMLICHEN TELEKOMMUNIKATIONSSYSTEM UMGESETZT WIRD
SMOOTH CHANGEOVER METHOD WITH A VARIETY OF ACCESS STATIONS IMPLEMENTED IN A SPATIAL TELECOMMUNICATIONS SYSTEM

(30) Priorité: 20.05.2016 FR 1600809
(43) Date de publication de la demande: 22.11.2017
(73) Titulaire: THALES, 92400 Courbevoie (FR)
(72) Inventeur: BAUDOIN, Cédric, 31037 TOULOUSE (FR); CORBEL, Erwan, 31037 TOULOUSE (FR); TAYRAC, Pierre, 31037 TOULOUSE (FR)
(74) Mandataire: Tanguy, Yannick

(56) Documents cités:
- US-B1- 6 230 013
- MUHAMMAD MUHAMMAD ET AL: "Network-Coding-Based Gateway Handover Scheme for Terabit Satellite Networks", 31ST AIAA INTERNATIONAL COMMUNICATIONS SATELLITE SYSTEMS CONFERENCE, 14 octobre 2013 (2013-10-14), XP055170613, Reston, Virginia DOI: 10.2514/6.2013-5718 ISBN: 978-1-62-410244-8
- "Digital Video Broadcasting (DVB); Interaction channel for Satellite Distribution Systems; Guidelines for the use of EN 301 790 in mobile scenarios", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. tr_102768v010101p.pdf, no. V1.1.1, 1 avril 2009 (2009-04-01), XP014043785,
- Nicolas Courville: "Gestion des ressources dans les systèmes satellitaires géostationnaires avec commutation embarquée", , 19 décembre 2006 (2006-12-19), pages 1-275, XP055349807, Extrait de l'Internet: URL:http://depozit.isae.fr/theses/2006/200 6_Courville_Nicolas.pdf [extrait le 2017-02-27]

## Description

La présente invention concerne un procédé de basculement doux (en anglais soft hand over) à diversité de stations d'accès pour basculer un trafic de données de télécommunications depuis une première station nominale d'accès (en anglais « nominal gateway) à un satellite relai d'un système de télécommunications spatiales vers une deuxième station redondante d'accès (en anglais « redundant gatway ») au même satellite, lorsqu'une première liaison d'accès de la première station d'accès subit ou va subir une atténuation qui ne permet pas à la première station d'accès d'assurer une transmission correcte du trafic vers le satellite.

L'invention concerne également un système de télécommunications spatiales, configuré pour la mise en œuvre du procédé de basculement doux d'un trafic de télécommunications entre la première station d'accès nominale et la deuxième station d'accès redondante. Un tel système est connu de l'art antérieur, par example du document MUHAMMAD MUHAMMAD ET AL: "Network-Coding-Based Gateway Handover Scheme for Terabit Satellite Networks", 31ST AIAA INTERNATIONAL COMMUNICATIONS SATELLITE SYSTEMS CONFERENCE, 14 octobre 2013 (2013-10-14).

Le domaine technique dans lequel l'invention est appliquée est celui des systèmes de télécommunications spatiales, et plus particulièrement ceux utilisant les bandes de fréquences élevées comprises dans les bandes Q/V et W, en raison de l'accroissement de capacité résultant d'une telle utilisation. La bande V est définie comme la bande des radiofréquences comprises entre 47,2 et 51,4 GHz tandis que la bande Q est défini comme la bande des radiofréquences comprises entre 37,5 et 42,5 GHz. Ces bandes de fréquences sont caractérisées par des niveaux d'atténuation très importants, causés par l'obstruction nuageuse et de l'ordre de 20 à 30 dB par exemple pour les bandes Q/V en fonction de la disponibilité de la transmission considérée. De tels niveaux d'atténuation ne peuvent pas être pris en charge par les seuls moyens classiques, c'est-à-dire ceux utilisant un contrôle de puissance et/ou un modulation/codage adaptatif. C'est pourquoi, pour les systèmes de télécommunications spatiales fonctionnant dans ces bandes hautes, des solutions de diversité de sites avec basculement des stations d'accès (en anglais « gateway) sont mises en œuvre pour assurer la disponibilité du système.

De manière connue, il existe trois types de solutions pour réaliser un basculement du trafic d'une station d'accès sur une autre :
.- un basculement de premier type, dénommé basculement non synchronisé (en anglais « unsynchronized hand-over »),
.- un basculement de deuxième type, dénommé en anglais « break before make hand-over», et
.- un basculement de troisième type, dénommé en anglais « make before break hand-over ».

Les solutions non synchronisées de premier type sont celles qui sont classiquement mises en œuvre lors d'opérations de maintenance où une station d'accès de secours (en anglais « backup gateway ») va prendre le rôle d'une station d'accès nominale active, le temps de sa maintenance. Cette opération n'est pas finement synchronisée entre le bord et le sol, c'est dire entre le satellite et la composante terrestre du système spatial de télécommunications, et conduit à la déconnexion de l'ensemble des terminaux, utilisateurs du service de télécommunication, avec un impact très important sur le service.

Les solutions de deuxième type, c'est-à-dire celles dénommées « break before make » consistent à arrêter la liaison d'accès en cours sur la première station d'accès nominale, puis à effectuer une commutation bord, c'est-à-dire au niveau du satellite, entre deux liaisons d'accès au satellite, avant d'activer la deuxième station d'accès redondante. Ce type de solution à l'avantage d'être simple à mettre en œuvre mais implique une coupure du service importante puisque les opérations de ce type de basculement sont réalisées successivement en série.

Les solutions de troisième type, c'est-à-dire celles dénommées « make before break » consistent à démarrer le service sur la deuxième station d'accès redondante le plus rapidement possible avant la commutation bord des liaisons d'accès. Ce type de solution implique des pertes de paquets de données importantes dans la première station d'accès nominale, précisément les paquets qui sont dans les mémoires tampon (en anglais « buffers ») au moment de la commutation bord, ainsi que des pertes sur la nouvelle liaison d'accès en raison de la perte de synchronisation des terminaux utilisateurs du système satellite après la commutation bord et de la durée de rétablissement d'une nouvelle synchronisation pour chacun des terminaux.

Le problème technique résolu par l'invention est de proposer un procédé de basculement doux de trafic de données entre une première station nominale d'accès satellitaire et une deuxième station redondante satellitaire d'un système de télécommunications spatiales qui minimise l'impact sur le service de télécommunications en diminuant les temps de coupure de la liaison station d'accès-satellite et/ou en évitant une synchronisation fine entre la première station nominale d'accès et la deuxième station redondante d'accès, réduisant ainsi les pertes de données dans les mémoires tampon desdites stations et la latence supplémentaire introduite, et/ou en diminuant le temps nécessaire à la resynchronisation des terminaux tout en minimisant les pertes de données qui pourraient être induites par les terminaux utilisateurs.

A cet effet, l'invention a pour objet un procédé de basculement doux à diversité de sites de stations d'accès selon la revendication 1.

Suivant des modes particuliers de réalisation, le procédé de de basculement doux à diversité de sites de stations d'accès comprend l'une ou plusieurs des caractéristiques suivantes :
.- la première commutation du trafic au niveau du segment sol entre la première station nominale d'accès et la deuxième station redondante d'accès est exécutée avant la deuxième commutation au niveau du segment bord du satellite entre la première liaison nominale d'accès et la deuxième liaison redondante d'accès sont synchronisées, et à partir de la première commutation au niveau du segment sol du trafic de données vers la deuxième station redondante d'accès, la première station nominale d'accès et la deuxième station redondante d'accès sont simultanément actives, et restent toutes deux actives jusqu'au début de la deuxième commutation au niveau du segment bord vers la deuxième liaison redondante d'accès, où seule la première station nominale d'accès est alors désactivée ;
.- la première commutation du trafic au niveau du segment sol entre la première station nominale d'accès et la deuxième station redondante d'accès est exécutée avant la deuxième commutation au niveau du segment bord du satellite entre la première liaison nominale d'accès et la deuxième liaison redondante d'accès sont synchronisées, et à partir de la première commutation au niveau du segment sol du trafic de données vers la deuxième station redondante d'accès, la deuxième station redondante d'accès tamponne le trafic de données entrant commuté au niveau sol par un nombre suffisant de trames vides pour permettre à des terminaux satellite du système de télécommunications spatiales de se resynchroniser au plus vite ;
.- en parallèle la première station nominale d'accès vide une mémoire tampon contenant les données de trafic non encore émises au moment du début de la première commutation du trafic au niveau sol entre les première et deuxième station d'accès ;
.- la phase de préparation comprend une étape de configuration de la deuxième station redondante d'accès avec la configuration de la première de première station nominale d'accès ;
.- la phase de préparation comprend une étape d'envoi d'une télécommande de satellite TC au satellite pour modifier l'ensemble de la matrice de commutation bord du satellite à une date de commutation spécifiée ;
.- la phase de préparation comprend une étape d'envoi d'une télécommande de satellite TC au satellite pour modifier l'ensemble de la matrice de commutation bord du satellite à une date de commutation spécifiée, suivie d'une étape de configuration de la deuxième station redondante d'accès avec la configuration de la première de première station nominale d'accès ;
.- le procédé de basculement doux à diversité de stations d'accès défini ci-dessus comprend une étape de prise de décision de la réalisation d'un basculement doux à diversité de stations d'accès à partir d'une prévision des évènements d'indisponibilité de la première liaison nominale d'accès fournie par la première station nominale d'accès à partir d'un modèle de prévision météorologique ou d'un estimateur du canal supporté par la première liaison nominale d'accès, la deuxième station redondante d'accès sur laquelle le basculement aura lieu, la date et la durée du basculement étant identifié dans la décision de basculement.

L'invention a également pour objet un système de télécommunications spatiales pour basculer de manière douce un trafic de données de selon la revendication 7.

Suivant des modes particuliers de réalisation, le système de télécommunications spatiales comprend l'une ou plusieurs des caractéristiques suivantes :
.- la première station nominale d'accès, la deuxième station redondante d'accès et le satellite sont configurés pour exécuter de manière synchronisée la première commutation du trafic au niveau du segment sol entre la première station nominale d'accès et la deuxième station redondante d'accès avant la deuxième commutation au niveau du segment bord du satellite entre la première liaison nominale d'accès et la deuxième liaison redondante d'accès ; et la première station nominale d'accès et la deuxième station redondante d'accès sont configurées pour être simultanément actives à partir du début de la première commutation au niveau du segment sol du trafic de données vers la deuxième station redondante d'accès, pour rester toutes deux actives jusqu'à la deuxième commutation au niveau du segment bord vers la deuxième liaison redondante d'accès, seule la première station nominale d'accès étant désactivée pendant et après la deuxième commutation au niveau du segment bord du satellite ;
.- la première station nominale d'accès, la deuxième station redondante d'accès et le satellite sont configurés pour exécuter de manière synchronisée la première commutation du trafic au niveau du segment sol entre la première station nominale d'accès et la deuxième station redondante avant la deuxième commutation au niveau du segment bord du satellite entre la première liaison nominale d'accès et la deuxième liaison redondante d'accès ; et la deuxième station redondante d'accès est configurée pour, à partir de la première commutation au niveau du segment sol du trafic de données vers la deuxième station redondante d'accès, tamponner le trafic de données entrant commuté au niveau sol par un nombre suffisant de trames vides à émettre pour permettre aux terminaux satellite du système de télécommunications satellite de se resynchroniser au plus vite ;
.- la première station nominale d'accès est configuré pour, à partir du début de la première commutation du trafic au niveau sol vers la deuxième station redondante d'accès, vider au moins un de ses mémoires tampon contenant les données de trafic non encore émises au moment du début de la première commutation du trafic au niveau sol entre les première et deuxième station d'accès ;
.- la station de coordination et de contrôle du système de télécommunications spatiales est configurée pour prendre une décision de réalisation d'un basculement doux à diversité de stations d'accès sur la base d'une prévision des évènements d'indisponibilité de la première liaison nominale d'accès de la première station nominale d'accès, ladite prévision étant déterminée à partir d'un modèle de prévision météorologique ou d'une estimation de l'état du canal supporté par la première liaison nominale d'accès, une identification de la deuxième station redondante d'accès sur laquelle le basculement aura lieu, la date et la durée du basculement étant identifiées dans ladite décision de basculement, et pour contrôler et réaliser un ordonnancement des étapes de la phase de préparation du basculement ladite phase de préparation comportant une étape d'envoi d'une télécommande de satellite TC au satellite pour modifier l'ensemble de la matrice de commutation bord du satellite à une date de commutation spécifiée, et une étape de configuration de la deuxième station redondante d'accès avec la configuration de la première de première station nominale d'accès ;
.- la synchronisation entre la première commutation du trafic au niveau du segment sol vers la deuxième station redondante, et la deuxième commutation au niveau du segment bord du satellite entre la première liaison nominale d'accès et la deuxième liaison redondante d'accès est préparée par la station de coordination et de contrôle, au travers de l'envoi par la station de coordination et de contrôle aux première et deuxième stations d'accès d'une consigne temporelle de l'instant de déclenchement de la commutation du trafic au niveau du segment sol, et au travers de l'envoi par la station d'émission de télécommandes TC d'une télécommande de satellite TC au satellite pour modifier l'ensemble de la matrice de commutation bord du satellite à une date de commutation spécifiée par ladite station de coordination et de contrôle.

L'invention sera mieux comprise à la lecture de la description d'une unique forme de réalisation qui va suivre, donnée uniquement à titre d'exemple et faite en se référant aux dessins sur lesquels :
- la Figure 1 est une vue d'un système de télécommunications spatiale configuré pour mettre en œuvre le procédé de basculement doux de trafic à diversité de sites de stations d'accès selon l'invention ;
- la Figure 2 est un ordinogramme d'un procédé de basculement doux de trafic à diversité de sites de stations d'accès selon l'invention ;
- la Figure 3 est un diagramme temporel d'ordonnancement des actions effectuées dans cadre du procédé de basculement doux selon l'invention par les divers éléments du système de télécommunications spatiales de la Figure 1, intervenant dans la mise en œuvre du procédé de basculement doux.

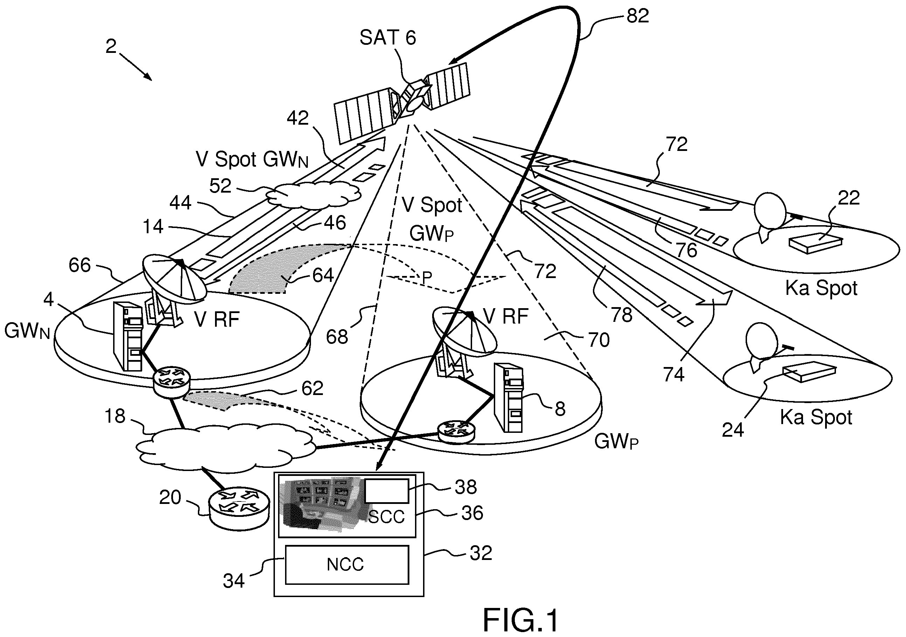

Suivant la Figure 1, un système de télécommunications spatiales 2 est configuré pour basculer de manière douce un trafic de données de télécommunication depuis une première station nominale 4, désignée également par GW_{N}, d'accès à un satellite relai 6 de télécommunications spatiales, vers une deuxième station redondante 8, désignée également par GW_{P}, d'accès au même satellite 6, lorsqu'une première liaison d'accès 14 de la première station d'accès 4 subit ou va subir une atténuation qui ne permet pas à la première station nominale d'accès 4 d'assurer une transmission correcte du trafic vers le satellite 6.

Le système de télécommunications spatiales 2 comprend le satellite relai 6 de télécommunications, la première station nominale d'accès 4 et la deuxième station redondante d'accès 8, et le cas échéant d'autres stations d'accès GW non représentées sur la Figure 1, et une infrastructure sol à haut débit 18 d'interconnexion des stations d'accès 4 GW_{N}, 8 GW_{P}, GW entre elles en réseau, l'infrastructure sol d'interconnexion 18 des stations d'accès en réseau étant raccordée à un réseau sol de télécommunications classique, non représenté, au travers d'une passerelle 20.

Le système de télécommunications spatiales 2 comprend également une pluralité de terminaux spatiaux 22, 24 utilisateurs de services de télécommunications, désignés également par ST, deux terminaux spatiaux utilisateurs 22, 24 étant seulement représentés ici.

Le système de télécommunications spatiales 2 comprend également un centre de coordination et de contrôle 32 du système de télécommunications spatiales, composé d'un centre de contrôle 34 NCC (en anglais Network Control Centre) de l'infrastructure sol d'interconnexion 18 des stations d'accès, et d'un centre de contrôle 36 SCC (en anglais Satellite Control Centre) du satellite 6. Ici de manière particulière, le centre de contrôle 34 NCC de l'infrastructure sol d'interconnexion 18 et le centre de contrôle 36 SCC du satellite 6 sont situés sur un même site géographique.

Le système de télécommunications spatiales 2 comprend également une station 38 TMTC de réception de télémesures TM et d'émission de télécommandes TC, depuis et vers le satellite 6. Ici sur la Figure 1 et de manière particulière, la station 38 TMTC est située sur le même site géographique que celui du centre de contrôle 36 SCC du satellite 6. En variante, les deux sites géographiques peuvent être différents et très éloignés l'un de l'autre.

Lorsque la première liaison d'accès 14 de la première station nominale 4 d'accès au satellite 6 est établie, la première station nominale 4 est activée et émet les données de trafic sur une voie montante 42 principale vers le satellite 6 en raison de l'activation d'un spot de réception satellite 44 par le satellite 6 en configurant la matrice des couvertures du satellite de manière idoine.

Ici, la voie montante 42 est qualifiée de principale afin de tenir compte de l'existence d'une voie descendante 46 servant de voie retour à des données de signalisation de débit plus faible que le débit des données du service de télécommunications. Ici sur la Figure 1 et à titre d'exemple la bande de fréquences utilisées sur la voie montante est la bande V de fréquences comprises entre 47,2 et 53,4 GHz tandis que la bande de fréquences utilisées sur la voie descendante est la bande Q des fréquences comprises entre 37,5 et 42,5 GHz. Par simplification de la Figure 1, le spot d'émission satellite de la voie descendante 46 n'est pas représenté, la couverture au sol de ce spot d'émission satellite non représenté étant supposée congruente à la couverture du spot de réception satellite 44.

Par la suite, la liaison d'accès d'une station d'accès GW quelconque désignera principalement, sauf s'il en est spécifié différemment, la liaison d'accès de la voie montante 42 depuis la station d'accès GW vers le satellite 6.

En variante, la bande de fréquences utilisées sur la voie montante est la bande V tandis que la bande de fréquences utilisées sur la voie descendante est la bande Ka.

En variante, les bandes de fréquences utilisées sur la voie montante et sur la voie descendante sont des bandes optiques.

Suivant la Figure 1 un ensemble de nuages ou couverture nuageuse 52, interposé entre la première station nominale d'accès et le satellite 6, sur la ligne de visibilité du satellite, indique l'existence d'une dégradation sévère des conditions de propagation et une atténuation élevée des signaux radioélectriques de la première liaison d'accès 14. Ainsi, il est nécessaire de réaliser dès que possible un basculement doux du trafic de télécommunications sur une autre station d'accès.

Suivant la Figure 1, le site d'implantation de la deuxième station redondante d'accès présente des conditions de propagation favorables en raison de l'absence de nuages obstruant la ligne de visibilité du satellite 6 vis-à-vis de la deuxième station redondante d'accès 8. En conséquence, la deuxième station redondante d'accès 8 peut être utilisée comme une station d'accès sur laquelle effectuer le basculement doux de trafic de télécommunications.

Suivant la Figure 1, il apparait que deux commutations de types différents doivent pouvoir être réalisées pour la mise en œuvre du basculement, une première commutation de premier type au niveau du segment sol suivie d'une deuxième commutation de deuxième type au niveau bord du satellite.

La première commutation du trafic au niveau du segment sol depuis la première station nominale d'accès vers la deuxième station redondante d'accès est représentée sur la Figure 1 dans un état virtuel de réalisation par une première flèche 62 ayant une bordure en traits pointillés.

La deuxième commutation du trafic au niveau du segment bord du satellite depuis la première liaison nominale d'accès au satellite vers la deuxième liaison redondante d'accès au satellite est représentée sur la Figure 1 dans un état virtuel de réalisation par une deuxième flèche 64 ayant une bordure en traits pointillés. La deuxième flèche 64 illustre la deuxième commutation au niveau bord comme une transition depuis le premier faisceau réception satellite 44 actuellement activé, correspondant à la première liaison nominale d'accès 14 actuellement activé et dont une coupe de la surface de contour 66 est dessiné en trait ininterrompu, vers un deuxième faisceau réception satellite 68 virtuel à activer, correspondant à une deuxième liaison redondante 70 d'accès de la deuxième station redondante d'accès 8 sur laquelle basculer et dont une coupe de la surface de contour 72 est dessinée en traits interrompus.

Ainsi, le système de télécommunications spatiales 2 est configuré pour mettre en œuvre un procédé de basculement doux qui comprend une phase de préparation du basculement suivie d'une phase d'exécution du basculement.

La première station nominale d'accès 4, la deuxième station redondante d'accès 8 et le satellite 6 sont configurés pour exécuter de manière synchronisée la première commutation du trafic au niveau du segment sol entre la première station nominale d'accès 4 et la deuxième station redondante d'accès 8 avant la deuxième commutation au niveau du segment bord du satellite 6 entre la première liaison nominale d'accès 14 et la deuxième liaison redondante d'accès 70.

La première station nominale d'accès 4 et la deuxième station redondante d'accès 8 sont configurées pour être simultanément actives à partir de la commutation au niveau du segment sol du trafic de données vers la deuxième station redondante d'accès 8, pour rester toutes deux actives jusqu'à la commutation au niveau du segment bord vers la deuxième liaison redondante d'accès 70, seule la première station nominale d'accès 4 étant désactivée lorsque la commutation au niveau du segment bord du satellite 6 a eu lieu et est terminée.

Suivant la Figure 1, il est à remarquer qu'avant de mettre en œuvre le basculement doux de trafic entre la première station nominale d'accès 4 et la deuxième station redondante d'accès 8, des liaisons descendantes 72, 74 de trafic de service, par exemple en bande Ka, sont établies respectivement depuis le satellite vers les terminaux spatiaux 22, 24 utilisateurs, et que des liaisons montantes 76, 78 de retour de signalisation sont également et respectivement établies depuis les terminaux spatiaux 22, 24 utilisateurs vers le satellite. Lorsque le basculement doux de trafic à diversité de sites de stations d'accès 6 a lieu et que la commutation au niveau du segment bord du satellite 6 entre la première liaison nominale d'accès 14 et la deuxième liaison redondante d'accès 70 est exécutée, les liaisons descendantes 72, 74 de trafic de service vers les terminaux utilisateurs 22, 24 ainsi que les liaisons montantes 76, 78 de retour de signalisation des terminaux 22, 24 vers le satellite 6 sont interrompues. Il en résulte une perte de synchronisation des terminaux utilisateurs 22, 24 du système de télécommunications spatiales 2 et un rétablissement d'une nouvelle synchronisation pour chacun des terminaux 22, 24 dont on cherche à minimiser la durée.

Afin de diminuer le temps de resynchronisation de chacun des terminaux 22, 24, la deuxième station redondante d'accès 8 est configurée pour, à partir de la commutation au niveau du segment sol du trafic de données vers la deuxième station redondante d'accès 8, tamponner le trafic de données entrant commuté au niveau sol par un nombre suffisant de trames vides à émettre, et ainsi permettre à des terminaux satellite 22, 24 du système de télécommunications satellite de se resynchroniser au plus vite.

Afin de diminuer la perte de données dans la mémoire tampon de la première station nominale d'accès 4, la première station nominale d'accès 4 est configurée pour, à partir du début de la commutation du trafic au niveau sol entre les première et deuxième stations d'accès 4, 8 et avant le début de la commutation au niveau bord des faisceaux ou des liaisons d'accès 14, 70, vider une mémoire tampon contenant les données de trafic non encore émises au moment du début de la commutation du trafic au niveau sol entre les première et deuxième station d'accès 4, 8.

La station de coordination et de contrôle 32 du système de télécommunications spatiales 2 est configurée pour prendre une décision de réalisation d'un basculement doux à diversité de stations d'accès sur la base d'une prévision des évènements d'indisponibilité de la première liaison nominale d'accès 14 de la première station nominale d'accès 4. Cette décision est prise à partir d'un modèle de prévision météorologique ou d'une estimation de l'état du canal, supporté par la première liaison nominale d'accès. Une identification de la deuxième station redondante d'accès, ici la deuxième liaison d'accès 70, sur laquelle le basculement aura lieu, une date et une durée du basculement, sont mentionnées et décrites avec précision dans la décision de basculement afin d'être exploitées comme données d'information permettant la mise en œuvre du basculement.

La station de coordination et de contrôle 32 du système de télécommunications spatiales est également configurée pour contrôler et réaliser un ordonnancement des étapes de la phase de préparation du basculement dans lequel une étape d'envoi d'une télécommande de satellite TC au satellite pour modifier l'ensemble de la matrice de commutation bord du satellite 6 à une date de commutation spécifiée, suivie d'une étape de configuration de la deuxième station redondante d'accès 8 avec la configuration de la première station nominale d'accès sont exécutées.

La configuration de la deuxième station 8, une fois effectuée, contient les paramètres de configuration de la première station nominale d'accès 4 existant juste avant le début de l'exécution de la première commutation. Ces paramètres incluent des données d'information radiofréquence RF telles que la bande de fréquences, la puissance, et incluent le contexte des terminaux, notamment l'identifiant accès, réseau, logon, contrat de service (SLA en anglais à compléter), paramètres concernant l'ordonnanceur et la gestion des ressources de transmission, paramètres de modulation/codage pour chacun des terminaux spatiaux du système de télécommunications spatiales 2.

Suivant la Figure 1, une troisième flèche 82 représente l'envoi d'une télécommande de satellite TC au satellite avec vérification de sa bonne réception pour modifier l'ensemble de la matrice de commutation bord du satellite 6 à une date de commutation spécifiée. De préférence, l'envoi de cette télécommande, réalisée par la station 38 TMTC d'émission de télécommandes TC, a lieu avant la configuration de la deuxième station redondante d'accès 8 avec la configuration de la première station nominale d'accès 4.

La synchronisation entre la première commutation du trafic au niveau du segment sol entre la première station nominale d'accès 4 et la deuxième station redondante d'accès 8, et la deuxième commutation au niveau du segment bord du satellite 6 entre la première liaison nominale d'accès 14 et la deuxième liaison redondante d'accès 70 est préparée par la station de coordination et de contrôle 32. Cette préparation est mise en œuvre au travers de l'envoi par la station de coordination et de contrôle aux première et deuxième stations d'accès 4, 8 d'un instant commun de déclenchement de la première commutation du trafic au niveau du segment sol, et au travers de l'envoi par la station d'émission de télécommandes TC 38 d'une télécommande de satellite TC au satellite pour modifier l'ensemble de la matrice de commutation bord du satellite à une date de commutation, spécifiée par la station de coordination et de contrôle 32.

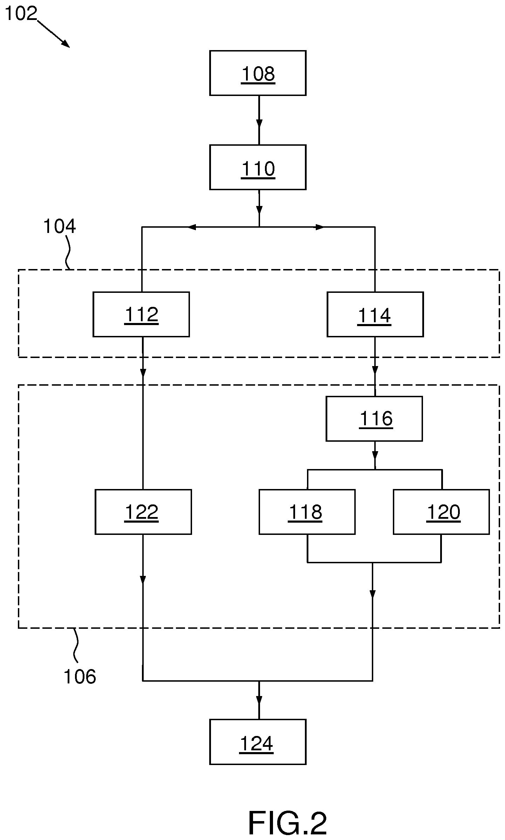

Suivant la Figure 2, un procédé de basculement doux 102 à diversité de sites de stations d'accès pour basculer un trafic de données de télécommunication entre la première station nominale d'accès 4 au satellite relai 6 du système de télécommunications spatiales 2 vers la deuxième station redondante d'accès 8 au même satellite 6 est mis en œuvre lorsque première liaison d'accès 14 de la première station nominale d'accès 4 subit ou va subir une atténuation qui ne permet pas à la première station d'accès nominale 4 d'assurer une transmission correcte du trafic vers le satellite 6.

Le procédé de basculement 102 comprend une phase de préparation du basculement 104 et une phase d'exécution du basculement 106, exécutée successivement, dans laquelle la première commutation du trafic au niveau du segment sol entre la première station nominale d'accès 4 et la deuxième station redondante d'accès, et la deuxième commutation au niveau du segment bord du satellite entre la première liaison nominale d'accès 14 et la deuxième liaison redondante d'accès 70 sont synchronisées.

Le procédé de basculement 102 comprend un ensemble d'étapes 108, 110, 112, 14, 116, 118, 120, 122, 124.

Dans une première étape 108, une prédiction des évènements d'indisponibilité de la première liaison nominale d'accès 14 de la première station nominale d'accès 4 est effectuée sur la base d'un modèle de prévision météorologique ou d'un estimateur du canal supporté par la première liaison nominale d'accès 14.

Puis, dans une deuxième étape 110, une décision de réaliser un basculement doux à diversité de stations d'accès est prise à partir des évènements d'indisponibilité, prédits dans la première étape 102 et concernant la première liaison nominale d'accès 14 de la première station nominale d'accès 4. Dans la décision de basculement, la deuxième station redondante d'accès 8 sur laquelle le basculement aura lieu, la date et la durée du basculement sont identifiées

Ensuite dans la phase de préparation 104 du basculement doux et en parallèle, une troisième étape 112 et une quatrième étape 114 sont exécutées.

Dans la troisième étape 112, la station 38 TMTC d'émission de télécommandes TC, envoie une télécommande satellite TC au satellite 6 pour modifier l'ensemble de la matrice de commutation bord du satellite 6 à une date de commutation, spécifiée par la station de coordination et de contrôle 32.

Dans la quatrième étape 114, la deuxième station redondante d'accès 8 est configurée avec la configuration de la première station nominale d'accès 4.

De préférence, l'envoi de la télécommande TC au satellite 6 a lieu avant la configuration de la deuxième station redondante d'accès 8 avec la configuration de la première station nominale d'accès 4.

Ensuite dans la phase d'exécution 106 du basculement doux, dans une cinquième étape 116 de commutation au niveau sol, le trafic de données est commuté vers la deuxième station redondante d'accès 8.

A partir de la première commutation au niveau du segment sol du trafic de données vers la deuxième station redondante d'accès 8, dans une sixième étape 118 la deuxième station redondante d'accès 8 tamponne le trafic de données entrant commuté au niveau sol par un nombre suffisant de trames vides pour permettre à des terminaux satellite 22, 24 du système de télécommunications satellite de se resynchroniser au plus vite.

A partir du début de la première commutation au niveau du segment sol et en parallèle, dans une septième étape 120 la première station nominale d'accès vide sa mémoire tampon contenant les données de trafic non encore émises au moment du début de la première commutation du trafic au niveau sol entre les première et deuxième station d'accès 4, 8.

Ainsi, à partir du début de la première commutation au niveau du segment sol du trafic de données vers la deuxième station redondante d'accès 8, la première station nominale d'accès 4 et la deuxième station redondante d'accès 8 sont simultanément actives, et restent toutes deux actives jusqu'à la deuxième commutation au niveau du segment bord vers la deuxième liaison redondante d'accès 70, où seule la première station nominale d'accès 4 est alors désactivée.

Ensuite dans une huitième étape 122, la deuxième commutation au niveau du segment bord du satellite entre la première liaison nominale d'accès 14 et la deuxième liaison redondante d'accès 70 est effectuée. Cette deuxième commutation est effectuée en parallèle pour la liaison d'accès sur la voie montante aller et pour la voie descendante. Dans cette huitième étape 122, le deuxième faisceau réception satellite 68 (voie montante) de la deuxième liaison redondante d'accès 70 et le deuxième faisceau émission satellite (voie descendante) de la deuxième liaison redondante d'accès sont activés tandis que le premier faisceau réception satellite 44 (voie montante) de la première liaison redondante d'accès et le premier faisceau émission satellite (voie descendante) de la première liaison redondante d'accès 14 sont désactivées. Une fois la deuxième commutation réalisée, la première liaison nominale d'accès 14 de la première station nominale d'accès 4 n'est plus active, et la deuxième liaison redondante d'accès 70 de la deuxième station redondante d'accès 8 est active.

Puis dans la neuvième étape 124, les terminaux satellite 22, 24 commencent à recevoir les trames vides émises par la deuxième station redondante d'accès 70 permettant la resynchronisation des modems desdits terminaux satellites 22, 24. Les terminaux satellite 22, 24 sont alors resynchronisés sur la voie aller 72, 74. Les terminaux satellite 22, 24 reçoivent alors de la signalisation sur la voie aller leur permettant de réutiliser la liaison retour. Le système de télécommunications spatiales 2 a alors atteint à nouveau un état de fonctionnement nominal.

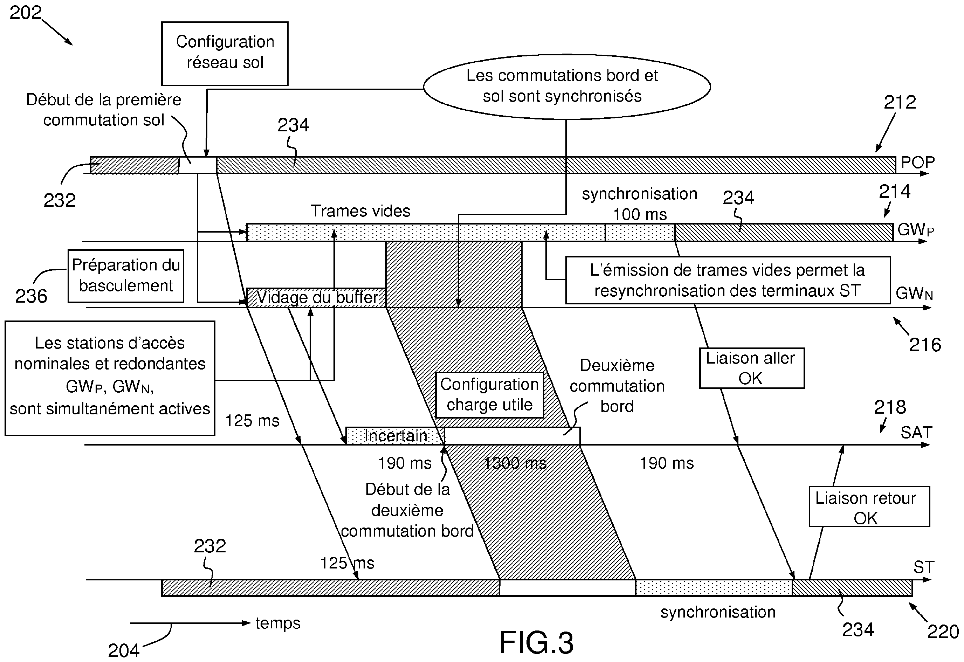

Suivant la Figure 3, un diagramme temporel d'ordonnancement 202 décrit l'enchaînement temporel, suivant un axe temporel 204 horizontal sur la Figure 3, des actions effectuées dans cadre du procédé de basculement 102 selon l'invention par les divers éléments du système de télécommunications spatiales 2 de la Figure 1 intervenant dans la mise en œuvre du procédé de basculement. Ces éléments, forment des points de passage, séquencés temporellement, des données de trafic et sont schématiquement disposés de haut en bas sur le diagramme en fonction des temps de transit séparant lesdits points entre eux. Les éléments sont les suivants : le point d'interconnexion au réseau de service POP, la deuxième station redondante d'accès 8 GW_{P}, la première station nominale d'accès 4 GW_{N}, le satellite 6 SAT, un terminal satellite, par exemple le terminal satellite 22. Aux éléments POP, GW_{P}, GW_{N}, SAT, et ST correspondent respectivement des trames temporelles des données 212, 214, 216, 218, 220.

Suivant la Figure 3, un premier flux de données 232 avant la première commutation au niveau segment sol et un deuxième flux de données 234 commutées après la première commutation au niveau segment sol sont représentés respectivement par un premier motif d'hachurage et un deuxième motif d'hachurage différents.

Suivant la Figure 3, la phase de préparation 104 du basculement au niveau sol est représentée par une boite 236 disposé avant les étapes d'envoi des trames vides par la deuxième station redondante d'accès et de vidage de la mémoire tampon de la première station nominale d'accès, représentées de manière sous-jacente par les trames 214, 216.

Suivant la Figure 3, la première caractéristique du procédé de basculement doux selon laquelle la première commutation au niveau du segment sol vers la deuxième station redondante d'accès 8 et la deuxième commutation au niveau bord vers le deuxième faisceau redondant de la deuxième liaison redondante d'accès sont finement synchronisées lors de l'exécution du basculement est mise en évidence. L'instant de déclenchement de la deuxième commutation au niveau bord est choisi postérieurement à l'instant de la première commutation sol effective du trafic vers la deuxième station redondante d'accès 8 où la première station nominale d'accès 4 reste active et continue d'émettre pour vider sa mémoire tampon.

Suivant la Figure 3, la deuxième caractéristique du procédé de basculement doux selon laquelle la première station nominale d'accès 4 et la deuxième station redondance d'accès 8 sont simultanément actives à partir de l'instant de la première commutation sol effective du trafic vers la deuxième station redondante d'accès 8 est également mise en évidence.

Suivant la Figure 3, la troisième caractéristique du procédé de basculement doux selon laquelle des trames vides sont émises par la deuxième station redondante d'accès 8 aux terminaux satellite via le satellite 6 avant de leur envoyer les paquets ou trames vides préalablement tamponnés de sorte à permettre aux terminaux satellite 22, 24 de se resynchroniser le plus vite possible est également mise en évidence.

Les trames temporelles décrites et leur agencement permettent ainsi de réaliser un basculement à diversité de sites de stations au travers d'une commutation synchronisée entre le bord et le sol. Ce basculement de trafic entre stations d'accès est réalisé de façon souple ou douce puisque les deux stations d'accès sont actives simultanément, le basculement effectif du trafic vers les terminaux satellite dépendant de la date de début et de la durée de la deuxième commutation bord. Enfin, l'envoi de trames vide sur le nouveau chemin d'acheminement des données de trafic permet d'accélérer la resynchronisation des terminaux et donc la remise en route du service de télécommunications.

Le procédé, décrit ci-dessus dans les Figures 1 à 3, offre plusieurs avantages. D'une part, la synchronisation fine bord-sol permet de minimiser le temps de coupure de la liaison station d'accès - satellite et donc diminuer l'impact du basculement sur le service de télécommunications, fourni à l'utilisateur. D'autre part la synchronisation fine bord-sol permet également de réaliser un basculement souple qui ne nécessite pas une synchronisation fine entre la première station nominale d'accès et la deuxième station redondante d'accès. Ces deux stations sont actives et fonctionnent en parallèle afin de minimiser les pertes de données dans les mémoires tampons et la latence supplémentaire introduite. Enfin, l'envoi par la deuxième station redondante d'accès de trames vides permet de minimiser le temps nécessaire à la resynchronisation des terminaux satellites tout en minimisant les pertes de donnés qui pourraient être induites par l'état non opérationnel des terminaux satellite.

Une synchronisation fine entre la première commutation au niveau sol et la deuxième commutation à bord du satellite concerne une synchronisation précise des opérations de première commutation et des opérations de deuxième commutation sur une même horloge de référence ou maîtresse partagée par le satellite et les deux stations d'accès En particulier cette synchronisation précise ou fine sol-bord doit permettre de maitriser et contrôler la durée séparant le début de la première commutation et le début de la deuxième commutation, cette durée étant prédéterminée et mise en œuvre par le centre de coordination et de contrôle au travers de l'envoi aux première et deuxième stations d'accès d'une consigne temporelle de l'instant de la première commutation du trafic au niveau du segment sol, et au travers de l'envoi au satellite d'une date spécifiée de commutation du faisceau montant par modification de l'ensemble de la matrice de commutation bord du satellite.

## Revendications

1. Procédé de basculement doux à diversité de sites de stations d'accès pour basculer un trafic de données de télécommunication entre une première station nominale d'accès (4) à un satellite relai (6) d'un système de télécommunications spatiales (2) vers une deuxième station redondante d'accès (8) au même satellite lorsqu'une première liaison d'accès (14) de la première station nominale d'accès (4) subit ou va subir une atténuation qui ne permet pas à la première station nominale d'accès (4) d'assurer une transmission correcte du trafic vers le satellite (6), **caractérisé en ce que**
le procédé de basculement comprend une phase de préparation (104) du basculement et une phase d'exécution du basculement, exécutée ensuite, dans laquelle une première commutation du trafic au niveau du segment sol entre la première station nominale d'accès (4) et la deuxième station redondante d'accès (8) est exécutée de manière finement synchronisée avant une deuxième commutation au niveau du segment bord du satellite (6) entre la première liaison nominale d'accès (14) et une deuxième liaison redondante d'accès (70) de la deuxième station redondante d'accès (70) au satellite (6), et
en parallèle et à partir de la première commutation au niveau du segment sol du trafic de données vers la deuxième station redondante d'accès (8), la deuxième station redondante d'accès (8) tamponne le trafic de données entrant commuté au niveau sol par un nombre suffisant de trames vides pour permettre à des terminaux satellite (22, 24) du système de télécommunications spatiales (2) de se resynchroniser au plus vite, et la première station nominale d'accès (4) vide une mémoire tampon contenant les données de trafic non encore émises au moment du début de la première commutation du trafic au niveau sol entre les première et deuxième station d'accès (4, 8).

2. Procédé de basculement doux à diversité de stations d'accès selon la revendication 1, dans lequel
à partir de la première commutation au niveau du segment sol du trafic de données vers la deuxième station redondante d'accès (8), la première station nominale d'accès (4) et la deuxième station redondante d'accès (8) sont simultanément actives, et restent toutes deux actives jusqu'au début de la deuxième commutation au niveau du segment bord vers la deuxième liaison redondante d'accès (70), où seule la première station nominale d'accès (4) est alors désactivée.

3. Procédé de basculement doux à diversité de stations d'accès selon l'une quelconque des revendications 1 à 2, dans lequel
la phase de préparation (104) comprend une étape (114) de configuration de la deuxième station redondante d'accès (8) avec la configuration de la première station nominale d'accès (4).

4. Procédé de basculement doux à diversité de stations d'accès selon l'une quelconque des revendications 1 à 3, dans lequel
la phase de préparation (104) comprend une étape (112) d'envoi d'une télécommande de satellite TC au satellite (4) pour modifier l'ensemble de la matrice de commutation bord du satellite (4) à une date de commutation spécifiée.

5. Procédé de basculement doux à diversité de stations d'accès selon l'une quelconque des revendications 1 à 4, dans lequel
la phase de préparation comprend une étape (112) d'envoi d'une télécommande de satellite TC au satellite pour modifier l'ensemble de la matrice de commutation bord du satellite à une date de commutation spécifiée, suivie d'une étape (114) de configuration de la deuxième station redondante d'accès (8) avec la configuration de la première station nominale d'accès (4).

6. Procédé de basculement doux à diversité de stations d'accès selon l'une quelconque des revendications 1 à 5,
comprenant une étape de prise de décision (110) de la réalisation d'un basculement doux à diversité de stations d'accès à partir d'une prévision (108) des évènements d'indisponibilité de la première liaison nominale d'accès (14) fournie par la première station nominale d'accès (4) à partir d'un modèle de prévision météorologique ou d'un estimateur du canal supporté par la première liaison nominale d'accès (14),
la deuxième station redondante d'accès (8) sur laquelle le basculement aura lieu, la date et la durée du basculement étant identifié dans la décision de basculement.

7. Système de télécommunications spatiales pour basculer de manière douce un trafic de données de télécommunication entre une première station nominale (4) d'accès à un satellite relai (6) de télécommunications spatiales vers une deuxième station redondante (8) d'accès au même satellite (6) lorsqu'une première liaison d'accès (14) de la première station nominale d'accès (4) subit ou va subir une atténuation qui ne permet pas à la première station nominale d'accès d'assurer une transmission correcte du trafic vers le satellite (6),
Le système de télécommunications spatiales comprenant Le satellite relai de télécommunications (6), et
La première station nominale d'accès (4) et la deuxième station redondante d'accès (8), et
Une infrastructure de réseau sol (18) à haut débit d'interconnexion des stations d'accès (4, 8) et alimentée en le trafic de données en un point d'entrée de réseau prédéterminé, et
Une pluralité de terminaux spatiaux (22, 24) utilisateurs de services de télécommunications, et
une station de coordination et de contrôle (32) du système de télécommunications spatiale, et
une station (38) TMTC de réception de télémesures TM et d'émission de télécommandes TC depuis et vers le satellite (6);
le système de télécommunications spatiales étant **caractérisé en ce qu'**il est configuré pour mettre en œuvre un procédé de basculement doux comprenant une phase de préparation (104) du basculement, une phase d'exécution du basculement, exécutée successivement, une première commutation du trafic au niveau du segment sol depuis la première station nominale d'accès (4) vers la deuxième station redondante d'accès (8), et une deuxième commutation au niveau du segment bord du satellite (6) entre la première liaison nominale d'accès (14) et une deuxième liaison redondante d'accès (70) de la deuxième station redondante d'accès (8) étant finement synchronisées au cours de la phase d'exécution (106) du basculement doux, et **en ce que**
la première station nominale d'accès (4), la deuxième station redondante d'accès (8) et le satellite (4) sont configurés pour exécuter de manière synchronisée la première commutation du trafic au niveau du segment sol entre la première station nominale d'accès (4) et la deuxième station redondante d'accès (8) avant la deuxième commutation au niveau du segment bord du satellite entre la première liaison nominale d'accès (14) et la deuxième liaison redondante d'accès (70), et
la deuxième station redondante d'accès (8) est configurée pour, à partir de la première commutation au niveau du segment sol du trafic de données vers la deuxième station redondante d'accès (8), tamponner le trafic de données entrant commuté au niveau sol par un nombre suffisant de trames vides à émettre pour permettre aux terminaux satellite (22, 24) du système de télécommunications satellite de se resynchroniser au plus vite, et
la première station nominale d'accès (4) est configuré pour, à partir du début de la première commutation du trafic au niveau sol vers la deuxième station redondante d'accès (8) et en parallèle du tamponnage effectué par la deuxième station redondante d'accès, vider au moins une de ses mémoires tampon contenant les données de trafic non encore émises au moment du début de la première commutation du trafic au niveau sol entre les première et deuxième station d'accès (4, 8).

8. Système de télécommunications spatiales pour basculer de manière douce un trafic de données de télécommunication entre deux stations d'accès selon la revendication 7, dans lequel
la première station nominale d'accès (4) et la deuxième station redondante d'accès (8) sont configurées pour être simultanément actives à partir du début de la première commutation au niveau du segment sol du trafic de données vers la deuxième station redondante d'accès (8), pour rester toutes deux actives jusqu'à la deuxième commutation au niveau du segment bord vers la deuxième liaison redondante d'accès (70), seule la première station nominale d'accès étant désactivée pendant et après la deuxième commutation au niveau du segment bord du satellite.

9. Système de télécommunications spatiales pour basculer de manière douce un trafic de données de télécommunication entre deux stations d'accès selon l'une quelconque des revendications 7 à 8, dans lequel
la station de coordination et de contrôle (32) du système de télécommunications spatiales est configurée pour
prendre une décision de réalisation d'un basculement doux à diversité de stations d'accès sur la base d'une prévision des évènements d'indisponibilité de la première liaison nominale d'accès (14) de la première station nominale d'accès (4), ladite prévision étant déterminée à partir d'un modèle de prévision météorologique ou d'une estimation de l'état du canal supporté par la première liaison nominale d'accès (14), une identification de la deuxième station redondante d'accès sur laquelle le basculement aura lieu, la date et la durée du basculement étant identifiées dans ladite décision de basculement, et pour
contrôler et réaliser un ordonnancement des étapes de la phase de préparation (104) du basculement ladite phase de préparation (104) comportant une étape (112) d'envoi d'une télécommande de satellite TC au satellite pour modifier l'ensemble de la matrice de commutation bord du satellite à une date de commutation spécifiée, et une étape (114) de configuration de la deuxième station redondante d'accès (8) avec la configuration de la première de première station nominale d'accès (4).

10. Système de télécommunications spatiales pour basculer de manière douce un trafic de données de télécommunication entre deux stations d'accès selon la revendication 9, dans lequel
la synchronisation entre la première commutation du trafic au niveau du segment sol vers la deuxième station redondante, et la deuxième commutation au niveau du segment bord du satellite entre la première liaison nominale d'accès (4) et la deuxième liaison redondante d'accès (8) est préparée par la station de coordination et de contrôle (32),
au travers de l'envoi par la station de coordination et de contrôle (32) aux première et deuxième stations d'accès (4, 8) d'une consigne temporelle de l'instant de déclenchement de la commutation du trafic au niveau du segment sol, et
au travers de l'envoi par la station d'émission de télécommandes (38) TC d'une télécommande de satellite TC au satellite pour modifier l'ensemble de la matrice de commutation bord du satellite à une date de commutation spécifiée par ladite station de coordination et de contrôle (32).

## Patentansprüche

1. Verfahren zum sanften Umschalten auf verschiedene Zugangsstations-Standorte zum Umschalten von Telekommunikationsdatenverkehr zwischen einer ersten nominalen Zugangsstation (4) auf einen Relais-Satelliten (6) eines Weltraum-Telekommunikationssystems (2) und einer zweiten redundanten Zugangsstation (8) zu demselben Satelliten, wenn eine erste Zugangsverbindung (14) der ersten nominalen Zugangsstation (4) eine solche Dämpfung erfährt oder erfahren wird, dass die erste nominale Zugangsstation (4) keine korrekte Übertragung des Verkehrs zum Satelliten (6) gewährleisten kann, **dadurch gekennzeichnet, dass**
das Umschaltverfahren eine Umschaltvorbereitungsphase (104) und eine anschließend durchgeführte Umschaltdurchführungsphase beinhaltet, in der ein erstes Umschalten des Verkehrs am Bodensegment zwischen der ersten nominalen Zugangsstation (4) und der zweiten redundanten Zugangsstation (8) in einer feinsynchronisierten Weise vor einem zweiten Umschalten am Bordsegment des Satelliten (6) zwischen der ersten nominalen Zugangsverbindung (14) und einer zweiten redundanten Zugangsverbindung (70) der zweiten redundanten Zugangsstation (70) zum Satelliten (6) durchgeführt wird, und
parallel und ab dem ersten Umschalten am Bodensegment des Datenverkehrs zur zweiten redundanten Zugangsstation (8) die zweite redundante Zugangsstation (8) den am Boden umgeschalteten eingehenden Datenverkehr durch eine ausreichende Anzahl leerer Frames puffert, um es zu ermöglichen, dass sich Satellitenterminals (22, 24) des Weltraum-Telekommunikationssystems (2) so schnell wie möglich neu synchronisieren, und die erste nominale Zugangsstation (4) einen Pufferspeicher leert, der die Verkehrsdaten enthält, die zu Beginn des ersten Umschaltens des Verkehrs am Boden zwischen der ersten und zweiten Zugangsstation (4, 8) noch nicht übertragen wurden.

2. Verfahren zum sanften Umschalten auf verschiedene Zugangsstationen nach Anspruch 1, wobei
auf der Basis des ersten Umschaltens am Bodensegment des Datenverkehrs zur zweiten redundanten Zugangsstation (8) die erste nominale Zugangsstation (4) und die zweite redundante Zugangsstation (8) gleichzeitig aktiv sind und beide bis zum Beginn des zweiten Umschaltens am Bordsegment auf die zweite redundante Zugangsverbindung (70) aktiv bleiben, wobei nur die erste nominale Zugangsstation (4) dann deaktiviert wird.

3. Verfahren zum sanften Umschalten auf verschiedene Zugangsstationen nach einem der Ansprüche 1 bis 2, wobei
die Vorbereitungsphase (104) einen Schritt (114) des Konfigurierens der zweiten redundanten Zugangsstation (8) mit der Konfiguration der ersten nominalen Zugangsstation (4) beinhaltet.

4. Verfahren zum sanften Umschalten auf verschiedene Zugangsstationen nach einem der Ansprüche 1 bis 3, wobei
die Vorbereitungsphase (104) einen Schritt (112) des Sendens eines Satellitenfernsteuerbefehls TC zum Satelliten (4) beinhaltet, um die gesamte an Bord des Satelliten (4) befindliche Umschaltmatrix zu einem bestimmten Umschaltzeitpunkt zu modifizieren.

5. Verfahren zum sanften Umschalten auf verschiedene Zugangsstationen nach einem der Ansprüche 1 bis 4, wobei
die Vorbereitungsphase einen Schritt (112) des Sendens eines Satellitenfernsteuerbefehls TC zum Satelliten zum Modifizieren der gesamten an Bord des Satelliten befindlichen Umschaltmatrix zu einem bestimmten Umschaltzeitpunkt, gefolgt von einem Schritt (114) des Konfigurierens der zweiten redundanten Zugangsstation (8) mit der Konfiguration der ersten nominalen Zugangsstation (4) beinhaltet.

6. Verfahren zum sanften Umschalten auf verschiedene Zugangsstationen nach einem der Ansprüche 1 bis 5,
das einen Entscheidungsfindungsschritt (110) zum Durchführen eines sanften Umschaltens auf verschiedene Zugangsstationen auf der Basis einer Vorhersage (108) von Nichtverfügbarkeitsereignissen der ersten nominalen Zugangsverbindung (14) beinhaltet, geliefert von der ersten nominalen Zugangsstation (4) auf der Basis eines meteorologischen Vorhersagemodells oder eines Schätzers des von der ersten nominalen Zugangsverbindung (14) unterstützten Kanals,
wobei die zweite redundante Zugangsstation (8), auf der das Umschalten erfolgen wird, der Zeitpunkt und die Dauer des Umschaltens in der Umschaltentscheidung identifiziert werden.

7. Weltraum-Telekommunikationssystem zum sanften Umschalten von Telekommunikationsdatenverkehr zwischen einer ersten nominalen Zugangsstation (4) zu einem Weltraum-Telekommunikations-Relaissatelliten (6) und einer zweiten redundanten Zugangsstation (8) zum selben Satelliten (6), wenn eine erste Zugangsverbindung (14) der ersten nominalen Zugangsstation (4) eine solche Dämpfung erfährt oder erfahren wird, dass die erste nominale Zugangsstation eine korrekte Übertragung des Verkehrs zum Satelliten (6) nicht gewährleisten kann,
wobei das Weltraum-Telekommunikationssystem Folgendes umfasst:
den Telekommunikationsrelaissatelliten (6) und
die erste nominale Zugangsstation (4) und die zweite redundante Zugangsstation (8), und
eine Hochgeschwindigkeits-Bodennetzinfrastruktur (18) zum Verbinden der Zugangsstationen (4, 8) miteinander, die an einem vorbestimmten Netzeintrittspunkt mit Datenverkehr gespeist wird, und
eine Vielzahl von Weltraumterminals (22, 24), die Telekommunikationsdienste nutzen, und
eine Koordinierungs- und Steuerstation (32) für das Weltraum-Telekommunikationssystem, und
eine TMTC-Station (38) zum Empfangen von TM-Telemetrie und zum Übertragen von Fernsteuerungsbefehlen TC vom und zum Satelliten (6);
wobei das Weltraumtelekommunikationssystem **dadurch gekennzeichnet ist, dass** es zum Durchführen eines sanften Umschaltverfahrens konfiguriert ist, das eine Umschaltvorbereitungsphase (104) und eine nachfolgend ausgeführte Umschaltausführungsphase beinhaltet, wobei ein erstes Umschalten des Verkehrs am Bodensegment von der ersten nominalen Zugangsstation (4) auf die zweite redundante Zugangsstation (8) und ein zweites Umschalten am Bordsegment des Satelliten (6) zwischen der ersten nominalen Zugangsverbindung (14) und einer zweiten redundanten Zugangsverbindung (70) der zweiten redundanten Zugangstation (8) im Laufe der Ausführungsphase (106) des sanften Umschaltens feinsynchronisiert werden, und dadurch, dass
die erste nominale Zugangsstation (4), die zweite redundante Zugangsstation (8) und der Satellit (4) zum synchronen Ausführen des ersten Umschaltens des Verkehrs am Bodensegment zwischen der ersten nominalen Zugangsstation (4) und der zweiten redundanten Zugangsstation (8) vor dem zweiten Umschalten am Bordsegment des Satelliten zwischen der ersten nominalen Zugangsverbindung (14) und der zweiten redundanten Zugangsverbindung (70) konfiguriert sind, und
die zweite redundante Zugangsstation (8) konfiguriert ist zum Puffern, ab dem ersten Umschalten am Bodensegment des Datenverkehrs auf die zweite redundante Zugangsstation (8), des eingehenden Datenverkehrs, umgeschaltet am Boden durch eine ausreichende Anzahl von zu übertragenden leeren Frames, um es zu ermöglichen, dass sich die Satellitenterminals (22, 24) des Satellitentelekommunikationssystems so schnell wie möglich wieder synchronisieren, und
die erste nominale Zugangsstation (4) konfiguriert ist zum Leeren, ab dem Beginn des ersten Umschaltens des Verkehrs am Boden auf die zweite redundante Zugangsstation (8) und parallel zum Puffern durch die zweite redundante Zugangsstation, mindestens eines ihrer Pufferspeicher, der die zum Zeitpunkt des Beginns des ersten Umschaltens des Verkehrs am Boden zwischen der ersten und der zweiten Zugangsstation (4, 8) noch nicht übertragenen Verkehrsdaten enthält.

8. Weltraum-Telekommunikationssystem zum sanften Umschalten von Telekommunikationsdatenverkehr zwischen zwei Zugangsstationen nach Anspruch 7, wobei
die erste nominale Zugangsstation (4) und die zweite redundante Zugangsstation (8) so konfiguriert sind, dass sie ab dem Beginn des ersten Umschaltens des Datenverkehrs am Bodensegment auf die zweite redundante Zugangsstation (8) gleichzeitig aktiv sind, damit beide bis zum zweiten Umschalten am Bordsegment auf die zweite redundante Zugangsverbindung (70) aktiv bleiben, wobei nur die erste nominale Zugangsstation während und nach dem zweiten Umschalten am Bordsegment des Satelliten deaktiviert wird.

9. Weltraum-Telekommunikationssystem zum sanften Umschalten von Telekommunikationsdatenverkehr zwischen zwei Zugangsstationen nach einem der Ansprüche 7 bis 8, wobei
die Koordinations- und Steuerstation (32) des Weltraum-Telekommunikationssytems konfiguriert ist zum
Treffen einer Entscheidung zum Durchführen eines sanften Umschaltens auf verschiedene Zugangsstationen auf der Basis einer Vorhersage der Nichtverfügbarkeitsereignisse der ersten nominalen Zugangsverbindung (14) der ersten nominalen Zugangsstation (4), wobei die Vorhersage auf der Basis eines meteorologischen Vorhersagemodells oder einer Schätzung des Zustands des von der ersten nominalen Zugangsverbindung (14) unterstützten Kanals, einer Identifikation der zweiten redundanten Zugangsstation, auf der das Umschalten stattfinden wird, bestimmt wird, wobei Zeitpunkt und Dauer des Umschaltens in der Umschaltentscheidung identifiziert werden, und zum
Steuern und Durchführen des Ablaufs der Schritte der Umschaltvorbereitungsphase (104), wobei die Vorbereitungsphase (104) einen Schritt (112) des Sendens eines Satellitenfernsteuerbefehls TC an den Satelliten zum Modifizieren der gesamten Umschaltmatrix an Bord des Satelliten zu einem bestimmten Umschaltzeitpunkt und einen Schritt (114) des Konfigurierens der zweiten redundanten Zugangsstation (8) mit der Konfiguration der ersten nominalen Zugangsstation (4) beinhaltet.

10. Weltraum-Telekommunikationssystem zum sanften Umschalten von Telekommunikationsdatenverkehr zwischen zwei Zugangsstationen nach Anspruch 9, wobei
die Synchronisation zwischen dem ersten Umschalten des Verkehrs am Bodensegment auf die zweite redundante Zugangsstation und das zweite Umschalten am Bordsegment des Satelliten zwischen der ersten nominalen Zugangsverbindung (4) und der zweiten redundanten Zugangsverbindung (8) von der Koordinations- und Steuerstation (32) vorbereitet wird,
durch Senden eines Zeitsollwerts des Zeitpunkts der Auslösung des Umschaltens des Verkehrs am Bodensegment durch die Koordinations- und Steuerstation (32) an die erste und zweite Zugangsstation (4, 8), und
durch Senden von Satellitenfernsteuerbefehlen TC durch die Fernsteuerungs-Sendestation (38) zum Satelliten, um die gesamte Umschaltmatrix an Bord des Satelliten zu einem von der Koordinations- und Steuerstation (32) festgelegten Umschaltzeitpunkt zu modifizieren.

## Claims

1. A smooth handover method with a variety of gateway sites for handing over telecommunication data traffic between a first nominal gateway (4) to a relay satellite (6) of a space telecommunications system (2) and a second redundant gateway (8) to the same satellite when a first gateway link (14) of the first nominal gateway (4) experiences or will experience attenuation that does not allow the first nominal gateway (4) to ensure correct transmission of the traffic to the satellite (6), **characterised in that**
the handover method comprises a phase (104) for preparing the handover and a phase for executing the handover, which is subsequently executed, wherein a first switchover of the traffic at the ground-based segment between the first nominal gateway (4) and the second redundant gateway (8) is executed in a finely synchronised manner before a second switchover at the segment on board the satellite (6), between the first nominal gateway link (14) and a second redundant gateway link (70) from the second redundant gateway (70) to the satellite (6); and
at the same time and from the first switchover at the ground-based segment of the data traffic to the second redundant gateway (8), the second redundant gateway (8) buffers the incoming data traffic switched over on the ground by a sufficient number of empty frames to allow satellite terminals (22, 24) of the space telecommunications system (2) to be resynchronised as quickly as possible, and the first nominal gateway (4) empties a buffer memory containing the traffic data not yet transmitted at the time of the start of the first switchover of the traffic on the ground between the first and second gateways (4, 8).

2. The smooth handover method with a variety of gateways as claimed in claim 1, wherein
on the basis of the first switchover at the ground-based segment of the data traffic to the second redundant gateway (8), the first nominal gateway (4) and the second redundant gateway (8) are simultaneously active, and both remain active until the start of the second switchover at the onboard segment to the second redundant gateway link (70), where only the first nominal gateway (4) is then deactivated.

3. The smooth handover method with a variety of gateways as claimed in any one of claims 1 to 2, wherein
the preparation phase (104) comprises a step (114) of configuring the second redundant gateway (8) with the configuration of the first nominal gateway (4).

4. The smooth handover method with a variety of gateways as claimed in any one of claims 1 to 3, wherein
the preparation phase (104) comprises a step (112) of sending a satellite telecommand TC to the satellite (4) to modify the entire onboard switching matrix of the satellite (4) on a specified switching date.

5. The smooth handover method with a variety of gateways as claimed in any one of claims 1 to 4, wherein
the preparation phase comprises a step (112) of sending a satellite telecommand TC to the satellite to modify the entire onboard switching matrix of the satellite on a specified switching date, followed by a step (114) of configuring the second redundant gateway (8) with the configuration of the first nominal gateway (4).

6. The smooth handover method with a variety of gateways as claimed in any one of claims 1 to 5,
comprising a step (110) of deciding to implement a smooth handover with a variety of gateways on the basis of a forecast (108) of unavailability events of the first nominal gateway link (14) supplied by the first nominal gateway (4) on the basis of a meteorological forecast model or an estimator of the channel supported by the first nominal gateway link (14),
with the second redundant gateway (8) on which the handover will take place, the date and the duration of the handover being identified in the handover decision.

7. A space telecommunications system for smoothly handing over telecommunication data traffic between a first nominal gateway (4) to a space telecommunications relay satellite (6) and a second redundant gateway (8) to the same satellite (6) when a first gateway link (14) from the first nominal gateway (4) experiences or will experience attenuation that does not allow the first nominal gateway to ensure correct transmission of the traffic to the satellite (6),
the space telecommunication system comprising:
the telecommunications relay satellite (6); and
the first nominal gateway (4) and the second redundant gateway (8); and
a high bit-rate ground-based network infrastructure (18) interconnecting gateways (4, 8) and supplied with data traffic at a predetermined network entry point; and
a plurality of space terminals (22, 24) using telecommunications services; and
a coordination and control station (32) of the space telecommunications system; and
a TMTC station (38) for receiving telemetry information TM and for transmitting telecommands TC from and to the satellite (6);
the space telecommunications system being **characterised in that** it is configured to implement a smooth handover method comprising a phase (104) of preparing the handover, a phase of executing the handover, which are executed successively, a first switchover of the traffic at the ground-based segment from the first nominal gateway (4) to the second redundant gateway (8), and a second switchover at the segment on board the satellite (6) between the first nominal gateway link (14) and a second redundant gateway link (70) from the second redundant gateway (8) being finely synchronised during the phase (106) of executing the smooth handover, and **in that**
the first nominal gateway (4), the second redundant gateway (8) and the satellite (4) are configured to execute, in a synchronised manner, the first switchover of the traffic at the ground-based segment between the first nominal gateway (4) and the second redundant gateway (8) before the second switchover at the segment on board the satellite between the first nominal gateway link (14) and the second redundant gateway link (70); and
the second redundant gateway (8) is configured to, from the first switchover at the ground-based segment of the data traffic to the second redundant gateway link (8), buffer the incoming data traffic switched on the ground by a sufficient number of empty frames to be transmitted to allow the satellite terminals (22, 24) of the satellite telecommunications system to be resynchronised as quickly as possible; and
the first nominal gateway (4) is configured to, from the start of the first switchover of the traffic on the ground to the second redundant gateway (8) and at the same time as the buffering performed by the second redundant gateway, empty at least one of its buffer memories containing the traffic data not yet transmitted at the time of the start of the first switchover of the traffic on the ground between the first and second gateways (4, 8).

8. The space telecommunications system for smoothly handing over telecommunications data traffic between two gateways as claimed in claim 7, wherein
the first nominal gateway (4) and the second redundant gateway (8) are configured to be simultaneously active from the start of the first switchover of the data traffic at the ground segment to the second redundant gateway (8), in order to both remain active until the second switchover at the onboard segment to the second redundant gateway link (70), with only the first nominal gateway being deactivated during and after the second switchover at the segment on board the satellite.

9. The space telecommunications system for smoothly handing over telecommunications data traffic between two gateways as claimed in any one of claims 7 to 8, wherein
the coordination and control station (32) of the space telecommunications system is configured to:
take a decision to perform a smooth handover with a variety of gateways on the basis of a forecast of the unavailability events of the first nominal gateway link (14) of the first nominal gateway (4), said forecast being determined on the basis of a meteorological forecast model or an estimate of the state of the channel supported by the first nominal gateway link (14), an identification of the second redundant gateway on which the handover will take place, the date and the duration of the handover being identified in said handover decision, and to
control and implement sequencing of the steps of the handover preparation phase (104), said preparation phase (104) comprising a step (112) of sending a satellite telecommand TC to the satellite to modify the entire onboard switching matrix of the satellite at a specified switching date, and a step (114) of configuring the second redundant gateway (8) with the configuration of the first nominal gateway (4).

10. The space telecommunications system for smoothly handing over telecommunications data traffic between two gateways as claimed in claim 9, wherein
the synchronisation between the first switchover of the traffic at the ground segment to the second redundant gateway, and the second switchover at the segment on board the satellite between the first nominal gateway link (4) and the second redundant gateway link (8) is prepared by the coordination and control station (32),
by the coordination and control station (32) sending, to the first and second gateways (4, 8), a time setpoint of the instant for triggering the switchover of the traffic at the ground segment, and
by the telecommand TC transmission station (38) sending a satellite telecommand TC to the satellite to modify the entire onboard switching matrix of the satellite on a switching date specified by said coordination and control station (32).
